# EUROPÄISCHE PATENTANMELDUNG

(11) **EP 1 118 934 A2**
(43) Veröffentlichungstag der Anmeldung: **25.07.2001**
(21) Anmeldenummer: 00128245.8
(22) Anmeldetag: 21.12.2000
(51) Int. Cl.: G06F 9/46, G05B 13/02

(54) **Objekt-Echtzeitkommunikation in der Steuerungstechnik**

(30) Priorität: 30.12.1999 US 475475
(71) Anmelder: SIEMENS AKTIENGESELLSCHAFT, 80333 München (DE)
(72) Erfinder: Patzak, Matthias, Dipl.-Ing., 09122 Chemnitz (DE)

(57) **Zusammenfassung**

Die Erfindung betrifft ein System und ein Verfahren zur Verkopplung von Architekturobjekten (BO1, BO2, BO3) in der Steuerungstechnik, welches die im Bereich der Bewegungssteuerung vorhandenen Anforderungen erfüllt. Das System besteht aus
- einer oder mehreren Rechnereinheiten (SB1-SB4),
- mindestens zwei auf den Rechnereinheiten (SB1-SB4) implementierten Basisobjekten (BO1, BO2, BO3) mit Kommunikationsbedarf über als Datenschnittstellen ausgebildete Objektschnittstellen,
- mindestens zwei Datenaustauschobjekten (DEO) für den Datenaustausch der Basisobjekte (BO1, BO2, BO3) untereinander und zu umgebenden Systemen,
- mindestens zwei Nachrichtenwarteschlangen (WS1, WS2) zur Verbindung der Datenaustauschobjekte (DEO),
- einem oder mehreren Bussystemen (BUS) zur externen Kommunikation der Rechnereinheit (SB1-SB4) und
- einem Objektprotokoll, implementiert auf der Rechnereinheit (SB1-SB4), welches zur Formatierung von Informationen zur Übermittlung in ExStreams (ES) und zur Abbildung jedes ExStreams (ES) auf mindestens einen Datenrahmen ExFrame (EF) vorgesehen ist.

## Beschreibung

Die Erfindung betrifft ein System und Verfahren zur Verkopplung von Architekturobjekten der Steuerungstechnik auf unterschiedlichen Hardwarekomponenten.

Ein derartiges System und Verfahren kommt beispielsweise im Bereich der Automatisierungstechnik bei der Bewegungssteuerung (motion control, abgekürzt MC) zum Einsatz.

Der Erfindung liegt die Aufgabe zugrunde, ein System und Verfahren zur Verkopplung von Architekturobjekten anzugeben, das die im Bereich der Bewegungssteuerung vorhandenen Anforderungen erfüllt.

Diese Aufgabe wird gelöst durch ein Objekt-Echtzeitkommunikationssystem zur Verkopplung von Basisobjekten der Steuerungstechnik, bestehend aus
- einer oder mehreren Rechnereinheiten,
- mindestens zwei auf den Rechnereinheiten implementierten Basisobjekten mit Kommunikationsbedarf über als Datenschnittstellen ausgebildete Objektschnittstellen,
- mindestens zwei Datenaustauschobjekten für den Datenaustausch der Basisobjekte untereinander und zu umgebenden Systemen,
- mindestens zwei Nachrichtenwarteschlangen zur Verbindung der Datenaustauschobjekte,
- einem oder mehreren Bussystemen zur externen Kommunikation der Rechnereinheiten und
- einem Objektprotokoll, implementiert auf der Rechnereinheit, welches zur Formatierung von Informationen vorgesehen ist.

Diese Aufgabe wird gelöst durch ein Objekt-Echtzeitkommunikationsverfahren zur Verkopplung von Basisobjekten der Steuerungstechnik, bei dem
- mindestens zwei auf Rechnereinheiten implementierte Basisobjekte mit Kommunikationsbedarf über als Datenschnittstellen ausgebildete Objektschnittstellen über mindestens zwei Datenaustauschobjekte Daten untereinander und zu umgebenden Systemen austauschen,
- mindestens zwei Nachrichtenwarteschlangen die Datenaustauschobjekte verbinden,
- die Rechnereinheit über ein oder mehrere Bussysteme extern kommunizieren und
- Informationen mit Hilfe eines auf der Rechnereinheit implementierten Objektprotokolls formatiert werden.

Die Kommunikation der Bewegungssteuerung unterscheidet sich von anderen Objektkommunikationsmodellen in der Ausprägung der Objektschnittstellen und der Art des Nachrichtenaustausches. Es existieren unterschiedliche Ausprägungen von Basisobjekten, die einerseits durch einen Grundumfang gemeinsamer und andererseits durch spezifische Steuerungsfunktionalität gekennzeichnet sind. Elementar ist die Fähigkeit, mit anderen Basisobjekten verschaltet werden zu können und mit ihnen zu kommunizieren. Sie setzen dazu auf dem Objekt-Kommunikationssystem der Steuerung auf. Die Anforderungen an Objektkommunikation unterscheiden sich in wesentlichen Merkmalen von entsprechenden Modellen in der Vernetzung objektorientierter Applikationen im Office- oder Intranet/Internet-Bereich. Eine zentrale Anforderung an die Funktionalität einer Bewegungssteuerung besteht in der echtzeitfähigen Reaktion auf Ereignisse im gesteuerten System. Durch die Verteilbarkeit der Funktionalität auf mehrere Hardwarekomponenten wird diese Anforderung auf das Kommunikationssystem der Steuerung ausgedehnt. Gemäß der Erfindung realisieren Basisobjekte ihre Kommunikationsanforderungen über speziell für den Datenaustausch ausgelegte Datenaustauschobjekte (Data Exchange Objects). Datenaustauschobjekte stellen alle für die Objektverschaltung und Kommunikation erforderlichen Funktionen als Objektmethoden bereit. Ein Datenaustauschobjekt bildet somit eine Schnittstelle (Interface) aus, über die der Zugang von anderen Basisobjekten und umgebenden Systemen ermöglicht wird. Basisobjekte können ihre Kommunikation über ein oder mehrere Datenaustauschobjekte realisieren. Die Kommunikation zwischen Datenaustauschobjekten ist verbindungsorientiert angelegt. Zu einem Nachrichtentransport gehört genau ein Absender und ein Empfänger. Die Kommunikation zwischen zwei Datenaustauschobjekten erfordert eine vorherige Verschaltung. Objektschnittstellen an Basisobjekten sind als Datenschnittstellen ausgebildet. Das bedeutet, dass im Mittelpunkt einer Kommunikationsanforderung der Transport einer Nachricht steht und nicht die Ausführung einer Funktion auf einem dezentral angeordneten Objekt. Dieser Ansatz erlaubt ein asynchrones Kommunikationsprinzip (s. u.).

Die Objektkommunikation setzt als Applikationsschicht auf Protokollen und Bussystemen auf, die als Basiskommunikation vorausgesetzt werden. Sie bildet ein einheitliches Objektprotokoll auf dem jeweiligen, spezifischen Protokollen der Basiskommunikation ab. Das Objektprotokoll ist zur Formatierung von Informationen zur Übermittlung in ExStreams und zur Abbildung jedes ExStreams auf mindestens einen Datenrahmen ExFrame vorgesehen. Das Objektprotokoll wird also als Nutzdatenrahmen (ExFrame) im unterlagerten Basisprotokoll transportiert. A priori bestehen keine Anforderungen an spezifische Kommunikations-Protokolle oder Busse. Die Voraussetzungen ergeben sich aus der Echtzeitfähigkeit und Transportkapazität der unterlagerten Kommunikationssysteme.

Die Definition eines Steuerungssystems aus verschalteten Architekturobjekten stellt einen neuen Ansatz in der Steuerungstechnik dar. Die sich daraus ableitende Aufgabe einer Echtzeitkommunikation zwischen den Objekten ist damit auch eine neue Anforderung an Kommunikationssysteme der Steuerungstechnik. Die außerhalb der Automatisierungstechnik etablierte Objektkommunikation im Office-Bereich geht vom Proxy-Stub-Prinzip aus und ist synchron angelegt. Asynchrone Kommunikationsprinzipien sind eine zusätzliche Option, nehmen aber eine Sonderstellung ein. Als Standards dominieren hier DCOM (Microsoft) und CORBA (Object Management Group). DCOM setzt zusätzlich auf DCE-RPC als unterlagerte Kommunikationsebene auf. Beide Systeme führen ein komplexes Übertragungsprotokoll. Protokoll und synchrones Übertragungsprinzip verhindern den Einsatz in echtzeitkritischen Automatisierungsapplikationen. Portierung und Einsatz von DCOM in der Automatisierungstechnik als führender Objektbusstandard waren bislang ohne Erfolg. Dieses Ergebnis war die Motivation zu einem neuen Objekt-Echtzeitkommunikationssystem, bei dem die Datenaustauschobjekte zur asynchronen Kommunikation vorgesehen sind. Das vorgeschlagene System unterscheidet sich somit von anderen Objektbussen durch das zugrunde gelegte Kommunikationsprinzip. Durch asynchrone Kommunikation zwischen den Steuerungsobjekten kann ein deterministisches Ablaufmodell für die Objekte und für die Übertragung sichergestellt werden. Ein Datenaustauschobjekt setzt seinen funktionellen Ablauf nach Übergabe einer Nachricht an das Kommunikationssystem fort, ohne eine Quittung des Empfängers zu erwarten. Dieses Prinzip erlaubt determiniert die Vorhersage der für den Sendevorgang erforderlichen Zeit. Die benötigte Transferzeit geht nicht in den Ablauf des Datenaustauschobjekts ein. Dieser Ansatz ist vor allem für die Kommunikation über Hardwaregrenzen hinweg ein entscheidender Vorteil. Bei synchroner Kommunikation (z. B. RPC basierte Systeme) wird für einen Empfänger der Ruf einer Funktionalität kodiert, der mit den in der Nachricht übergebenen Parametern zur Ausführung kommt. Der Rufende (Absender) kann seine Abarbeitung erst bei Beendigung der Funktionalität fortsetzen. Auf Seite des Gerufenen (Empfänger) muss anhand der empfangenen Nachricht die Zuordnung zu einer angebotenen Funktionalität erfolgen und diese zur Abarbeitung gebracht werden. Nach Ausführung der Funktionalität wird über den Rückgabewert dem Rufenden der Austritt aus dem Funktionsruf ermöglicht. Synchrone Kommunikation im Sinne eines Funktionsrufes (z. B. DCE-RPC) gestattet keine deterministische Vorhersage der Ausführungszeit. Mögliche Fehler beim Nachrichtentransfer (gegebenenfalls Sendewiederholungen bei Ruf und Antwort, Kommunikation über mehrere Kommunikationssegmente) oder bei der Ausführung der Funktion sowie unbekannte Randbedingungen (z. B. Zeitpunkt der Ausführung) verhindern eine Aussage unterhalb nicht echtzeitrelevanter Worst-Case-Annahmen.

Das hier vorgeschlagene System eignet sich besonders zum Einsatz in echtzeitkritischen Automatisierungsapplikationen. Es soll hier kurz auf den Begriff der Echtzeitfähigkeit eingegangen werden. Mit Echtzeitfähigkeit wird die Anforderung bezeichnet, Systemreaktionen der Steuerung unterhalb der Prozessreaktionszeit sicherzustellen. Neben der erforderlichen Verarbeitungsgeschwindigkeit steht vor allem das zeitlich determinierte Verhalten der beteiligten Funktionalitäten im Vordergrund, um Systemreaktionszeit und damit Echtzeitfähigkeit prognostizieren zu können. Für die Kommunikation leiten sich daraus Anforderungen an Kommunikationsprinzip und Austauschformat ab. Die Echtzeitfähigkeit des Gesamtsystems ergibt sich aus den diesbezüglichen Eigenschaften der Steuerungsfirmware, des Betriebssystems, der Hardwarekomponenten und der beteiligten Kommunikationssysteme. Das vorgeschlagene System unterscheidet sich von anderen Objektbussen durch das zugrunde gelegte Kommunikationsprinzip. Durch asynchrone Kommunikation zwischen den Steuerungsobjekten kann ein deterministisches Ablaufmodell für die Objekte und für die Übertragung sichergestellt werden. Das Wesen des Systems liegt in der Echtzeitfähigkeit der Kommunikation durch diesen Determinismus des Übertragungsprinzips.

Das System spielt kann seine spezifischen Stärken ausspielen, wenn es so ausgeführt ist, dass die Rechnereinheiten auf mehrere durch das Bussystem verbundene Hardwarekomponenten verteilt sind, dass eine logische Kommunikationsebene mit Nachrichtenwarteschlangen zur Verbindung der Datenaustauschobjekte mit Objekt-Verschaltungen, die auf den Hardwarekomponenten bestehen, vorgesehen ist und dass die ExFrames zur seriellen Übermittlung auf dem Bussystem vorgesehen sind. Es bildet die Grundlage zur Verkopplung von Architekturobjekten der Steuerungstechnik auf unterschiedlichen Hardwarekomponenten. Steuerungsobjekte können dadurch unabhängig davon, ob sie auf einer gemeinsamen oder auf unterschiedlichen Hardwarekomponenten betrieben werden, einheitlich verschaltet werden.

Da die Verschaltung zwischen Automatisierungsgeräten meist über Feldbussysteme erfolgt, wird im vorgeschlagenen System vorteilhaft als Bussystem ein Feldbussystem vorgesehen. Mit der Definition eines schlanken und effektiven Übertragungsprotokolls wird dabei der - bezogen auf die Übertragungskapazität von LAN - geringen Nutzdatenkapazität von Feldbussen Rechnung getragen.

Zur Adressierung der Datenaustauschobjekte an den Basisobjekten ist ein systemweit gültiges, logisches Adressformat festgelegt. Datenaustauschobjekte werden über eine eindeutige, dreistufige Adressierung aus der Adresse der Hardwarekomponente im Gesamtsystem, der Adresse des Basisobjekts auf der Hardwarekomponente und der Interface-Adresse am Basisobjekt adressiert. Weiterhin ist für die Objektkommunikation ein einheitliches Austauschobjekt ExStream festgelegt. Nachrichten zwischen Basisobjekten werden demnach über Datenaustauschobjekte mit einer eindeutigen MC-Adresse abgebildet und auf einem vereinheitlichten Format ausgetauscht (Objektprotokoll).

Die ExStreams sind durch einen Kopf, den ExStream-Header, und ein in der Länge nicht begrenztes Datenfeld gekennzeichnet. Diese Möglichkeit hebt die Notwendigkeit der Unterscheidung von Telegrammen für kurze Nachrichten und Domains für große Datenmengen auf.

Feldbusse weisen verglichen mit Kommunikationssystemen der Bürowelt (LAN und WAN) aufgrund der besonderen Einsatzbedingungen im Feldbereich (Störumgebung an Maschinen) eine deutlich geringere Nutzdatenkapazität und Übertragungsgeschwindigkeit auf. Bei der Auslegung des Objektprotokolls liegt daher der Schwerpunkt auf einem schlanken Design, dass auf die Kommunikationsanforderungen von Basisobjekten zugeschnittenen ist. Header und Protokoll-Daten sind im Umfang gering gehalten, um in der seriellen Übertragung den zeitlichen Versatz zwischen Sender und Empfänger zu minimieren. Gleichzeitig ist ein schlankes Protokoll Voraussetzung für die Abbildung auf verschiedenen Basiskommunikationssystemen mit unterschiedlicher Nutzdaten-Transportkapazität. Deshalb wird vorgeschlagen, dass die ExFrames einen Header zur Bereitstellung von Informationen zum Sender und zum Empfänger der ExFrames und zur Rekonstruktion von fragmentierten ExFrames und ein in seiner Länge begrenztes zweites Datenfeld enthalten, wobei eine Unterteilung des Headers in einen Basic Header und einen Transfer Specific Header vorgesehen ist, wobei der Basic Header eine allen ExFrames gemeinsame Headerinformation enthält und der Transfer Specific Header in seiner Größe festgelegt ist und transportspezifische Informationen enthält, die durch den Aufbau eines control bytes bestimmt sind.

Datenaustauschobjekte stehen in Kommunikationsbeziehungen zu Datenaustauschobjekten auf einer gemeinsamen oder auf dezentral angeordneten Hardwarekomponenten. Die Kommunikation erfolgt über prioritätsgesteuerte Nachrichtenwarteschlangen. Datenaustauschobjekte werden über Nachrichtenwarteschlangen zum Senden und Empfangen von ExStreams miteinander verbunden. Die dazu notwendige Verschaltung erfolgt über auf den Hardwarekomponenten aktive Verwaltungsfunktionalität. Liegt eine Verschaltung zwischen auf einer Rechnereinheit implementierten ersten und zweiten Datenaustauschobjekten über prioritätsgesteuerte Nachrichtenwarteschlangen vor, ist die Verschaltung einer Sende-Warteschlange des ersten Datenaustauschobjekts zur Empfangs-Warteschlange des zweiten Datenaustauschobjekts und umgekehrt vorgesehen.

Liegt eine Verteilung über Hardwaregrenzen vor, bildet die Steuerungskommunikation den Datenaustausch auf einem Objektbus ab. Aus Sicht der Datenaustauschobjekte stellt sich die Objektbus-Kommunikation als logische Ebene dar. Diese logische Kommunikationsebene verbirgt die Objekt-Verschaltungen, die lokal auf der Hardwarekomponente oder über das Netzwerk zu anderen Hardwarekomponenten bestehen. Sie stellt ebenfalls Sende- und Nachrichtenwarteschlangen bereit und vereinheitlicht so das Kommunikations- und Verschaltungsprinzip von Datenaustauschobjekten. Das führt zu einer durchgehenden Lösung der Objektkommunikation im Steuerungssystem. Durch Serialisierung zu sendender Austauschobjekte auf dem Bus erfolgt der Transport zur adressierten Hardwarekomponente. Beim Empfänger wird aus dem Objektprotokoll ein ExStream generiert und in die Empfangswarteschlange des adressierten Datenaustauschobjekts rangiert. Die empfangenen Nachrichten werden im Datenaustauschobjekt interpretiert und führen dadurch zum Aufruf von Objektfunktionalität.

Zusammenfassend ergeben sich folgende Vorteile aus der Definition des Objekt-Echtzeitkommunikationssystems:
- Auf Echtzeitanforderungen und Steuerungssystem zugeschnittenes, schlankes Objektprotokoll
- Asynchrones Kommunikationsprinzip
- Einheitliche Sicht von Datenaustauschobjekten auf lokale und hardwareübergreifende Kommunikation
- Freie Abbildung auf Basiskommunikation, keine spezifischen Feldbusse oder Protokolle werden vorausgesetzt

Im Folgenden wird die Erfindung anhand des in den Figuren dargestellten Ausführungsbeispiels näher beschrieben und erläutert.

Es zeigen:
- FIG 1: den synchronen Ruf einer dezentralen Funktion über Proxy-Stub-Prinzip,
- FIG 2: den Aufbau des ExStream-Headers,
- FIG 3: den Aufbau des ExFrames,
- FIG 4: den Aufbau des Control Bytes im Transfer Specific Header,
- FIG 5: den Aufbau des ExFrame-Headers,
- FIG 6: das asynchrone Kommunikationsprinzip und
- FIG 7: Verschaltungsausprägungen von Basisobjekten über Datenaustauschobjekte: gerätelokal, segmentverschaltet, segmentübergreifend.

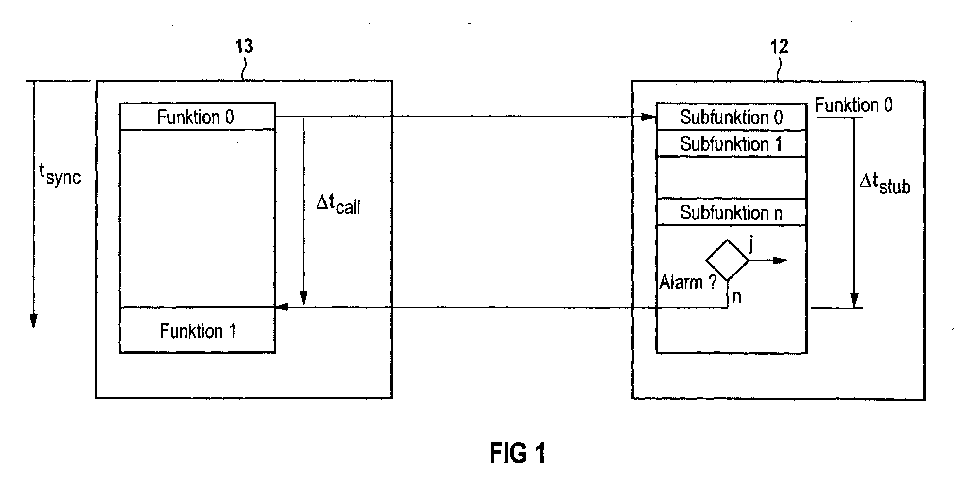

Das folgende Ausführungsbeispiel zeigt ein Objekt-Echtzeitkommunikationssystem der Steuerungstechnik in seinen Prinzipien und im Protokoll. Objektkommunikation ist außerhalb der Automatisierungstechnik im Office-Bereich etabliert. Als Standards dominieren hier DCOM (Microsoft) und CORBA (Object Management Group). Beide Verfahren gehen vom Proxy-Stub-Prinzip aus und sind synchron angelegt. FIG 1 zeigt den synchronen Ruf einer dezentralen Funktion über Proxy-Stub-Prinzip. Eine am Proxy 13 gerufene Funktion 0 ruft ihrerseits eine Funktion 0 am Stub 12. Die Verzögerungszeit tcall ist nicht deterministisch. Erst nach Ende der Ausführung am Stub 12 kann die Funktion 0 am Proxy 13 verlassen und die Abarbeitung fortgesetzt werden. Der Zeitpunkt der Fortsetzung bei Funktion 1 des Proxy 13 ist danach nicht vorhersagbar.

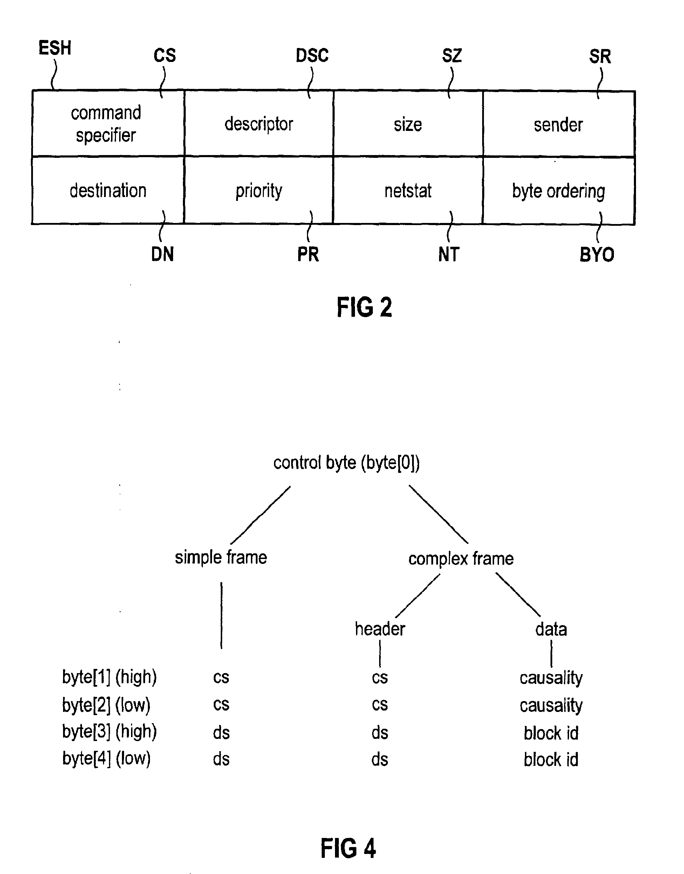

FIG 2 zeigt den Aufbau des ExStream-Headers ESH. ExStreams ES sind durch einen Kopf, den ExStream-Header ESH, und ein in der Länge nicht begrenztes Datenfeld gekennzeichnet. Da die Länge nicht begrenzt ist, besteht keine Notwendigkeit der Unterscheidung von Telegrammen für kurze Nachrichten und Domains für große Datenmengen. Da jedes zusätzlich zu übertragende Byte die Übertragungszeit eines ExStreams ES erhöht, ist Redundanz zu vermeiden. Insbesondere das Verteilen von ExStreams ES auf mehrere Datenrahmen, den ExFrames EF,(im sogenannten Complex Mode) kostet Laufzeit, daher sollte das Ziel der Austausch kurzer Nachrichten sein. Für den Transport ist der Inhalt des ExStream-Headers ESH maßgeblich. Der Inhalt der transportierten Daten berührt nur die am Nachrichtenaustausch beteiligten MC-Objekte. Der ExStream-Header ESH entspricht dem in FIG 2 gezeigten Aufbau. Durch den Command Specifier CS wird ein Dienst beschrieben. Datenaustauschobjekte DEO mit mehreren Interface-Methoden interpretieren den Command Specifier CS zum Aufruf der damit verbundenen Objektmethode. Der Descriptor DSC kann zur Inhaltsbeschreibung einer Nachricht, Referenzierung oder zeitlichen Einordnung verwendet werden. Die Art der Verwendung ist den Datenaustauschobjekten DEO freigestellt. Das Headerelement Size SZ enthält die Anzahl der im ExStream ES transportierten Nutzdaten. In den Elementen Sender SR und Destination DN werden die Absender- und Empfängeradressen der kommunizierenden Datenaustauschobjekte DEO (Baustein, Objekt, Interface) eingetragen. Das Datum Priority PR enthält die Transportpriorität eines ExStreams ES. Im Beispiel existieren vier Prioritäten:
- Alarm (z. B. Fehler)
- Courier (z. B. Achsdaten)
- Command (z. B. Datenaustauschobjekt-Kommando-Interface)
- External (z. B. Bedienen und Beobachten)

Der Parameter Netstat NT dient der Kennzeichnung eines ExStreams ES als Dienst der MC-Kommunikation (NetInfo, Services). In ExStreams ES wird automatisch das Datum Byte Ordering BYO der sendenden Maschine eingetragen. Die empfangende MC-Kommunikation fügt das lokale Byte Ordering BYO dazu. Beim Auslesen von Daten durch Methoden der Klasse ExStream ES werden eventuelle Unterschiede in der Datenrepräsentation berücksichtigt.

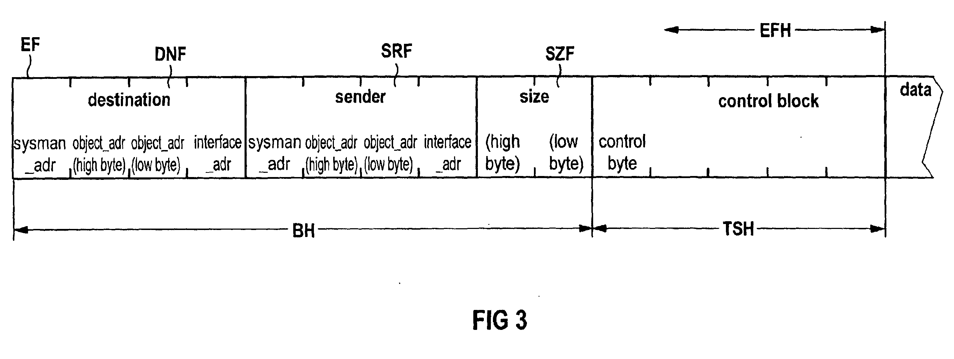

FIG 3 zeigt den Datenrahmen ExFrame EF. Dieser ist das Austauschformat zwischen Kommunikations-Treiberobjekten. Der ExFrame EF ist der Transportcontainer der MC-Kommunikation. ExStreams ES werden auf ein bis n ExFrames EF abgebildet. ExFrames EF sind für die Anforderungen innerhalb der MC-Kommunikation optimiert. Ein ExFrame EF setzt sich aus Header EFH und Datenfeld zusammen. Durch die Headerinformation ist es der Kommunikation möglich, ExFrames EF an ihren Bestimmungsort zu transportieren. Weiterhin sind Informationen enthalten, die die Rekonstruktion fragmentierter, d. h. auf mehrere ExFrames EF aufgeteilter, ExStreams ES ermöglichen. Ebenfalls zur Headerinformation gehören Transportprioritäten, Service-Kennungen für kommunikationsinterne Dienste, Byte Ordering u. a. Die im ExFrame transportierten Daten werden als Byte-Feld transportiert. Es ist in seiner Länge systemweit einheitlich begrenzt. Die endgültige Länge ist beispielsweise eine Datenfeldlänge von maximal 197 Byte + 15 Byte Header. Diese Länge orientiert sich an den Gegebenheiten der zum Einsatz vorgesehenen Feldbusse. Der Header EFH ist in den Basic Header BH und den Transfer Specific Header TSH unterteilt. Der Basic Header BH beinhaltet die gemeinsame Headerinformation aller ExFrames EF. Der Transfer Specific Header TSH ist im Beispielsfall in seiner Größe auf EX FRAME CTRL LEN (5 Byte) festgelegt und enthält transportspezifische Informationen, die durch den Aufbau des Control Bytes bestimmt sind. Der Basic Header BH enthält die MC-Adressen Destination DSF und Sender SRF, in denen die Objektadressen der kommunizierenden MC-Objekte eingetragen werden. In das Element Size SZF trägt die Transportschicht die Anzahl der transferierten Daten ein. Alle Headerelemente werden _{"}big endian" eingetragen.

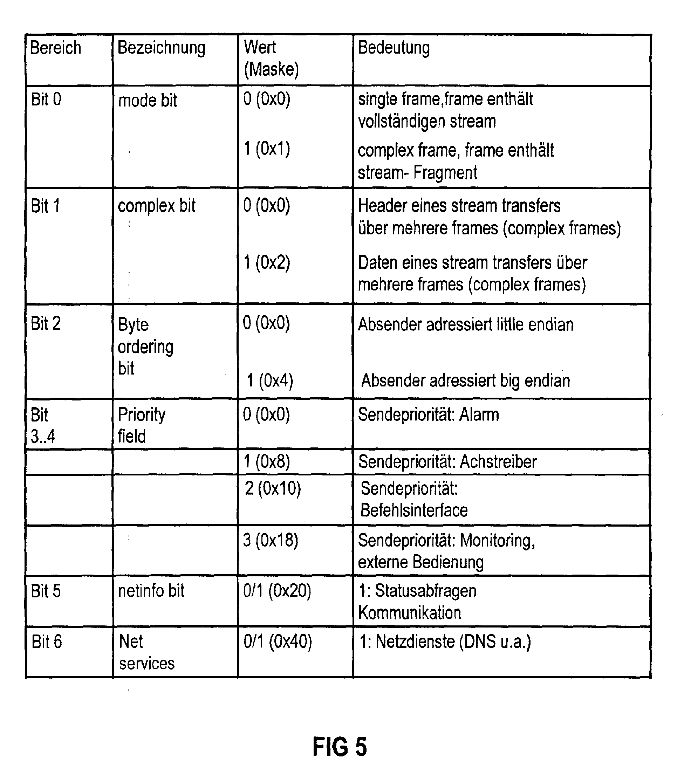

Die transportspezifische Information des ExFrames EF ergibt sich aus der Interpretation des Aufbaus des Control Bytes, dessen Struktur in FIG 4 wiedergegeben ist. ExFrames EF werden nach Simple oder Complex Frames unterschieden. Als Simple Frames werden ExFrames EF bezeichnet, die einen vollständigen ExStream ES enthalten. Der Frame-Manager der sendenden Transportschicht muss dazu keine Fragmentierung des ExStreams ES vornehmen. Die Übertragung von ExStreams ES in Simple Frames ist daher erheblich schneller als die komplexer ExStreams ES. Bei Complex Frames wird zwischen Header- und Data-Frames unterschieden. Durch den Header-Frame wird die empfängerseitige Kommunikation auf den Empfang eines langen ExStreams eingestellt.

Die in FIG 5 dargestellte Tabelle gibt einen Überblick über die in den Bits des Control Bytes kodierte Information.

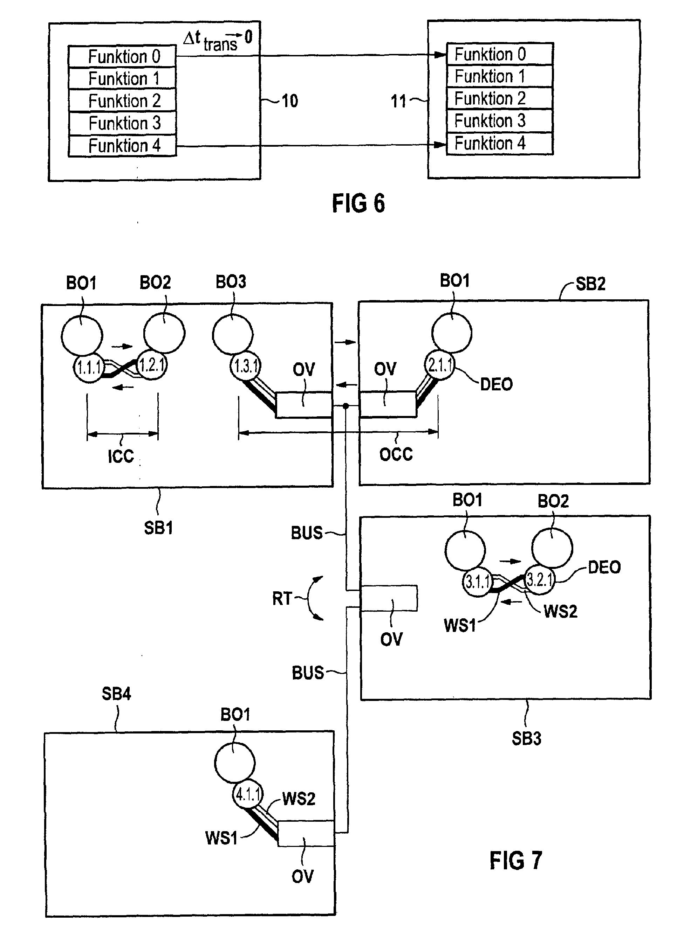

FIG 6 verdeutlicht das asynchrone Kommunkationsprinzip. Im Unterschied zu synchroner Kommunikation entscheidet ein Datenaustauschobjekt DEO als Sender-Objekt 10 selbst über den Zeitpunkt des Lesens und der Bearbeitung einer Nachricht aus der Empfangswarteschlange WS1, WS2. Die empfangenen Nachrichten werden im Datenaustauschobjekt DEO interpretiert und führen dadurch zum Aufruf von Objektfunktionalität. Ein Datenaustauschobjekt DEO setzt seinen funktionellen Ablauf nach Übergabe einer Nachricht an das Kommunikationssystem fort, ohne eine Quittung des Empfängers 11 zu erwarten.

FIG 7 zeigt die verschiedenen Verschaltungsausprägungen von Basisobjekten über Datenaustauschobjekte: gerätelokal (ICC), segmentverschaltet (OCC), segmentübergreifend. In den Rechnereinheiten SB1 und SB3 sind Basisobjekte BO1, BO2 gerätelokal über zwei Datenaustauschobjekte DEO verschaltet. Die beiden Datenaustauschobjekte DEO wiederum kommunizieren über zwei Nachrichtenwarteschlangen WS1, WS2. Ein Basisobjekt B03 in der Rechnereinheit SB1 kommuniziert segmentverschaltet mit einem Basisobjekt BO1 in der Rechnereinheit SB2. Mittels Objektverschaltungen OV werden die Nachrichtenwarteschlangen WS1, WS2 an den Datenaustauschobjekten DEO mit dem Bussystem BUS verbunden. Diese Kommunikation kann auch segmentübergreifend erfolgen, wie beispielhaft am Basisobjekt BO1 in der Rechnereinheit SB4 dargestellt. Der dazu nötige Routing-Vorgang im Bussystem BUS wird durch das Bezugszeichen RT gekennzeichnet. Das Kommunikationssystem ist Bestandteil einer Architektur verteilter Steuerungsobjekte. Darin wird einheitlich die Verschaltung von Architekturobjekten BO1, B02, B03 über die Datenaustauschobjekte DEO vorgenommen. Aus Sicht der verschalteten Architekturobjekte BO1, BO2, BO3 liegt kein Unterschied zwischen der gerätelokalen und der geräteübergreifenden Kommunikation vor.

Das Wesen des Objekt-Echtzeitkommunikationssystems beruht in folgenden Merkmalen:
- Für die Verschaltung von Architekturobjekten der Steuerungstechnik wird ein neues, offenes Objekt-Kommunikationssystem definiert.
- Es beschreibt ein asynchrones Kommunikationsverfahren, das durch den Determinismus des Übertragungsprinzips den Echtzeitanforderungen des Ablaufmodells der Architekturobjekte gerecht wird.
- Für das Kommunikationssystem wird ein der begrenzten Übertragungskapazität von Feldbussystemen Rechnung tragendes Protokoll definiert.
- Es setzt keinen exklusiven Standard als Basis für die unterlagerten Kommunikationsebenen voraus.

Zusammenfassend betrifft die Erfindung somit ein System und ein Verfahren zur Verkopplung von Architekturobjekten BO1, BO2, BO3 in der Steuerungstechnik, welches die im Bereich der

Bewegungssteuerung vorhandenen Anforderungen erfüllt. Das System besteht aus
- einer oder mehreren Rechnereinheiten SB1-SB4,
- mindestens zwei auf den Rechnereinheiten SB1-SB4 implementierten Basisobjekten BO1, BO2, BO3 mit Kommunikationsbedarf über als Datenschnittstellen ausgebildete Objektschnittstellen,
- mindestens zwei Datenaustauschobjekten DEO für den Datenaustausch der Basisobjekte BO1, BO2, BO3 untereinander und zu umgebenden Systemen,
- mindestens zwei Nachrichtenwarteschlangen WS1, WS2 zur Verbindung der Datenaustauschobjekte DEO,
- einem oder mehreren Bussystemen BUS zur externen Kommunikation der Rechnereinheit SB1-SB4 und
- einem Objektprotokoll, implementiert auf der Rechnereinheit SB1-SB4, welches zur Formatierung von Informationen zur Übermittlung in ExStreams ES und zur Abbildung jedes ExStreams ES auf mindestens einen Datenrahmen ExFrame EF vorgesehen ist.

## Patentansprüche

1. Objekt-Echtzeitkommunikationssystem zur Verkopplung von Basisobjekten (BO1, BO2, BO3) der Steuerungstechnik, bestehend aus
- einer oder mehreren Rechnereinheiten (SB1-SB4),
- mindestens zwei auf den Rechnereinheiten (SB1-SB4) implementierten Basisobjekten (BO1, BO2, BO3) mit Kommunikationsbedarf über als Datenschnittstellen ausgebildete Objektschnittstellen,
- mindestens zwei Datenaustauschobjekten (DEO) für den Datenaustausch der Basisobjekte (BO1, BO2, BO3) untereinander und zu umgebenden Systemen,
- mindestens zwei Nachrichtenwarteschlangen (WS1, WS2) zur Verbindung der Datenaustauschobjekte (DEO),
- einem oder mehreren Bussystemen (BUS) zur externen Kommunikation der Rechnereinheit (SB1-SB4) und
- einem Objektprotokoll, implementiert auf der Rechnereinheit (SB1-SB4), welches zur Formatierung von Informationen vorgesehen ist.

2. System nach Anspruch 1,
**dadurch gekennzeichnet** ;
dass das Objektprotokoll zur Formatierung von Informationen zur Übermittlung in ExStreams (ES) und zur Abbildung jedes ExStreams (ES) auf mindestens einen Datenrahmen ExFrame (EF) vorgesehen ist.

3. System nach Anspruch 1 oder 2,
**dadurch gekennzeichnet,**
dass die Datenaustauschobjekte (DEO) zur asynchronen Kommunikation vorgesehen sind.

4. System nach einem der vorhergehenden Ansprüche,
**dadurch gekennzeichnet,**
dass das System zum Einsatz in echtzeitkritischen Automatisierungsapplikationen vorgesehen ist.

5. System nach einem der vorhergehenden Ansprüche,
**dadurch gekennzeichnet,**
dass die Rechnereinheiten (SB1-SB4) auf mehrere durch das Bussystem (BUS) verbundene Hardwarekomponenten verteilt sind, dass eine logische Kommunikationsebene mit Nachrichtenwarteschlangen (WS1, WS2) zur Verbindung der Datenaustauschobjekte (DEO) mit Objekt-Verschaltungen (OV), die auf den Hardwarekomponenten bestehen, vorgesehen ist und dass die ExFrames (EF) zur seriellen Übermittlung auf dem Bussystem (BUS) vorgesehen sind.

6. System nach einem der vorhergehenden Ansprüche,
**dadurch gekennzeichnet,**
dass als Bussystem (BUS) ein Feldbussystem vorgesehen ist.

7. System nach einem der vorhergehenden Ansprüche,
**dadurch gekennzeichnet,**
dass zur Adressierung der Datenaustauschobjekte (DEO) an den Basisobjekten (BO1, BO2, BO3) ein systemweit gültiges, logisches Adressformat festgelegt ist.

8. System nach einem der vorhergehenden Ansprüche,
**dadurch gekennzeichnet,**
dass die ExStreams (ES) einen ExStream-Header (ESH) und ein in der Länge nicht begrenztes erstes Datenfeld enthalten.

9. System nach einem der vorhergehenden Ansprüche,
**dadurch gekennzeichnet,**
dass die ExFrames (EF) einen Header (EFH) zur Bereitstellung von Informationen zum Sender und zum Empfänger der ExFrames (EF) und zur Rekonstruktion von fragmentierten ExFrames (EF) und ein in seiner Länge begrenztes zweites Datenfeld enthalten, wobei eine Unterteilung des Headers (EFH) in einen Basic Header (BH) und einen Transfer Specific Header (TSH) vorgesehen ist, wobei der Basic Header (BH) eine allen ExFrames (EF) gemeinsame Headerinformation enthält und der Transfer Specific Header (TSH) in seiner Größe festgelegt ist und transportspezifische Informationen enthält, die durch den Aufbau eines Control Bytes bestimmt sind.

10. System nach einem der vorhergehenden Ansprüche,
**dadurch gekennzeichnet,**
dass eine Verschaltung zwischen auf einer Rechnereinheit (SB1-SB4) implementierten ersten und zweiten Datenaustauschobjekten (DEO) über prioritätsgesteuerte Nachrichtenwarteschlangen (WS1, WS2) vorgesehen ist, wobei die Verschaltung einer Sende-Warteschlange des ersten Datenaustauschobjekts (DEO) zur Empfangs-Warteschlange des zweiten Datenaustauschobjekts (DEO) und umgekehrt vorgesehen ist.

11. Objekt-Echtzeitkommunikationsverfahren zur Verkopplung von Basisobjekten (BO1, BO2, BO3) der Steuerungstechnik, bei dem
- mindestens zwei auf Rechnereinheiten (SB1-SB4) implementierte Basisobjekte (BO1, BO2, BO3) mit Kommunikationsbedarf über als Datenschnittstellen ausgebildete Objektschnittstellen über mindestens zwei Datenaustauschobjekte (DEO) Daten untereinander und zu umgebenden Systemen austauschen,
- mindestens zwei Nachrichtenwarteschlangen (WS1, WS2) die Datenaustauschobjekte (DEO) verbinden,
- die Rechnereinheit über ein oder mehrere Bussysteme (BUS) extern kommunizieren und
- Informationen mit Hilfe eines auf der Rechnereinheit (SB1-SB4) implementierten Objektprotokolls formatiert werden.

12. Verfahren nach Anspruch 11,
**dadurch gekennzeichnet,**
dass die Informationen mit Hilfe des Objektprotokolls formatiert und in ExStreams (ES) übermittelt und die ExStreams (ES) auf mindestens einen Datenrahmen ExFrame (EF) abgebildet werden.

13. Verfahren nach Anspruch 11 oder 12,
**dadurch gekennzeichnet**,
dass die Datenaustauschobjekte (DEO) asynchron kommunizieren.

14. Verfahren nach einem der Ansprüche 11 bis 13,
**dadurch gekennzeichnet,**
dass das Verfahren zum Einsatz in echtzeitkritischen Automatisierungsapplikationen vorgesehen ist.

15. Verfahren nach einem der Ansprüche 11 bis 14,
**dadurch gekennzeichnet,**
dass bei auf mehrere durch das Bussystem (BUS) verbundene Hardwarekomponenten verteilten Rechnereinheiten (SB1-SB4) Datenaustauschobjekte (DEO) über eine logische Kommunikationsebene mit Nachrichtenwarteschlangen (WS1, WS2) mit Objekt-Verschaltungen (OV), die auf den Hardwarekomponenten bestehen, verbunden werden und dass die ExFrames (EF) auf dem Bussystem (BUS) seriell übermittelt werden.

16. Verfahren nach einem der Ansprüche 11 bis 15,
**dadurch gekennzeichnet,**
dass als Bussystem (BUS) ein Feldbussystem vorgesehen ist.

17. Verfahren nach einem der Ansprüche 11 bis 16,
**dadurch gekennzeichnet**,
dass zur Adressierung der Datenaustauschobjekte (DEO) an den Basisobjekten (BO1, BO2, BO3) ein systemweit gültiges, logisches Adressformat festgelegt ist.

18. Verfahren nach einem der Ansprüche 11 bis 17,
**dadurch gekennzeichnet**,
dass die ExStreams (ES) einen ExStream-Header (ESH) und ein in der Länge nicht begrenztes erstes Datenfeld enthalten.

19. Verfahren nach einem der Ansprüche 11 bis 18,
**dadurch gekennzeichnet**,
dass Informationen zum Sender und zum Empfänger der ExFrames (EF) und zur Rekonstruktion von fragmentierten ExFrames (EF) in einem Header (EFH) des ExFrames (EF) bereitgestellt werden und Daten in einem in seiner Länge begrenzten zweiten Datenfeld übermittelt werden, wobei eine Unterteilung des Headers (EFH) in einen Basic Header (BH) und einen Transfer Specific Header (TSH) vorgesehen ist, wobei der Basic Header (BH) eine allen ExFrames (EF) gemeinsame Headerinformation enthält und der Transfer Specific Header (TSH) in seiner Größe festgelegt ist und transportspezifische Informationen enthält, die durch den Aufbau eines Control Bytes bestimmt sind.

20. Verfahren nach einem der Ansprüche 11 bis 19,
**dadurch gekennzeichnet,**
dass auf einer Rechnereinheit (SB1-SB4) implementierte erste und zweite Datenaustauschobjekte (DEO) über prioritätsgesteuerte Nachrichtenwarteschlangen (WS1, WS2) verschaltet werden, wobei eine Sende-Warteschlange des ersten Datenaustauschobjekts (DEO) zur Empfangs-Warteschlange des zweiten Datenaustauschobjekts (DEO) verschaltet wird und umgekehrt.
